# EUROPEAN PATENT SPECIFICATION

(11) **EP 0 549 555 B1**
(45) Date of publication and mention of the grant of the patent: **21.05.1997**
(21) Application number: 92850306.9
(22) Date of filing: 22.12.1992
(51) Int. Cl.: F16L 21/035

(54) **Method and device for making a tubular element with external joint-sealing means**
Verfahren und Vorrichtung zur Herstellung eines Rohrstückes mit auswendiger Dichtung
Procédé et dispositif pour fabrication d'un élément de tuyauterie avec une garniture d'étanchéité extérieure

(30) Priority: 23.12.1991 SE 9103830
(43) Date of publication of application: 30.06.1993
(73) Proprietor: LINDAB AKTIEBOLAG, S-269 82 Bastad (SE)
(72) Inventor: Persson, Edgard, S-232 54 Akarp (SE)
(74) Representative: Wallin, Bo-Göran

(56) References cited:
- WO-A-90/14544
- US-A- 3 400 954
- US-A- 3 955 834
- US-A- 4 050 703

## Description

The present invention is directed to a method for securing an elastic, circumferential joint-sealing means on the outside of a tubular element and more specifically relates to a method as recited in appended claim 1, based on the document US-A-3,955,834.

The invention also relates to a device for securing such a joint-sealing means as recited in the preamble of appended claim 3, based on the document US-A-3,955,834.

The problem of providing efficient sealing in a tubular element to be inserted in another pipe or tube has long been dealt with by those skilled in the art. Over the last decades, a number of solutions have been proposed to solve the particular problem of providing a seal between two ventilation ducts inserted in each other with close fit. In most cases, use is made of an elastic sealing ring, generally of rubber, which is fixed externally on the end portion of the first tube, on to which the second, outer tube is to be passed. Thus, the sealing ring is mounted on the inner tube and generally has one or two radially projecting flanges, which are bent by the outer tube when placed on the inner tube. Three different solutions of this problem, representing relevant background art to the present invention, have been elaborated in Sweden and will be briefly discussed hereinafter.

US-A-3,955,834 (AB Svenska Fläktfabriken) discloses a solution according to which a sealing ring of L-shaped cross-section is attached to a tubular element by bending the end portion of the tubular element outwardly and clamping a base portion of the sealing ring, which further has a radially projecting sealing lip. Although this construction serves its purpose quite well in most applications, it suffers from certain limitations. The bending of the end portion of the tubular element is quite difficult to achieve technically speaking. In fact, it requires substantial bending to provide a safe grip about the base portion of the seal. Further, it is suited primarily for seals with only one lip, which is an inconvenience, since double-lip seals are required in many cases, especially at high pressures in the ventilation ducts.

Another solution is described in US-A-4,050,703 (Lindab AB) in which a double-lip seal of U-shaped cross-section is anchored in a circumferential channel in a tubular element. The seal is fastened by a clamping strap being applied and tightened on the U-web of the seal, whereupon the strap is anchored practically by spot welding, especially in an overlapping portion thereof. In terms of sealing, this solution is highly satisfactory whereas in terms of manufacture it suffers from certain inconveniences. First, a distinct operation is required for providing holes in the U-web of the seal in those places where spot welding to the tubular element is to be carried out. Second, spot welding may be disadvantageous, in that it may look reliable on ocular inspection, yet prove insufficient when subjected to load, such that the clamping strap may become loose and the anchorage of the seal on the tubular element be jeopardised. A particular drawback is encountered in spot welding on a painted or plastic-coated tubular element, since the paint or plastic must then be ground off from the place where spot welding is to be done. The grinding must be carried out in a special operation.

Yet another solution is disclosed in WO 90/14544 (Stifab Plåt AB) where a seal of L-shaped cross-section is fastened by applying a hook-shaped portion thereof around the free outer end of the tubular element, whereupon a thread or wire is strapped around a foot portion of the seal to clamp it on to the tubular element. This way of mounting the seal is however quite difficult to apply in practice, especially regarding the provision of a safe grip of the seal about the end of the tubular element, which may be considered the reverse application of the bending technique disclosed in the above-mentioned publication US-A-3,955,834. Also, the application of the clamping thread may in this respect be considered a complicated and perhaps even superfluous operation. Finally, it should be noted that this construction, too, generally has but one sealing lip.

A similar sealing function is disclosed in US-A-3,400,954 where a circumferential seal is caused to grip about the outer end of a tubular element.

Another example of pertinent background art is SU-A-972,197 disclosing a device for interconnecting two ventilation ducts. This device comprises a flexible strap which is applied around the joint between two tubular elements to be connected. Internally, there is provided an insert element which is fastened to the flexible strap by means of rivets and washers. However, this device has no external sealing lips.

Thus, there is a need to provide a method which is not as complex as the solutions discussed above, yet highly reliable, for anchoring a joint seal on a tubular element, while ensuring a high sealing effect by means of sealing lips. There is of course also a need for a simple and reliable device for carrying out the method. The invention is directed in particular, but not exclusively, to the fastening of double-lip seals (according to US-A-4,050,703), since such seals provide optimum sealing effect.

One object of the present invention thus is to overcome the above-mentioned drawbacks by providing a method for fastening an elastic, circumferential joint-sealing means on the outside of a tubular member without any appreciable risk of the seal coming loose after mounting. According to another aspect of the invention, this method should involve as few and as simple operations as possible. According to a special aspect of the invention, the method should allow fastening the sealing means on painted or plastic-coated tubular elements without necessitating any additional previous operations, such as grinding.

The invention also has for its object to provide a simple and reliable device for carrying out the method. Further, the invention aims at providing a tubular element equipped with joint-sealing means secured thereto in a far more reliable manner than hitherto possible.

These and other objects, which will appear from the following description, have now been achieved by a method which is of the type described in the introduction to the specification, and which, in addition, comprises the distinctive steps of the invention as recited in the characterising clause of appended claim 1.

The objects of the invention are also achieved by means of a device which is of the type described in the introduction to the specification, and which, in addition, has the distinctive features of the invention as recited in the characterising clause of appended claim 3.

Other objects of the invention are recited in the dependent claims reciting particularly preferred variants and embodiments of the invention.

The invention confers a number of advantages, such as shorter total cycle time for fastening the sealing means on the tubular element and very high resistance of the connecting means ensuring the anchorage of the sealing means. The high resistance of the connecting means is linked particularly with the fact that the seal is secured by connecting means extending through the wall of the tubular element, whereby locking action is achieved by the parts of the rivet projecting on the inside and on the outside of the tube wall, that is, the rivet head and the upset rivet shank.

Embodiments of the invention will be described in more detail hereinbelow with reference to the accompanying drawings.

Fig. 1 schematically shows a device for carrying out the method according to the invention in a partial section of the end portion of a tubular element, on which a joint-sealing means is to be anchored by means of a pointed rivet.

Fig. 2 is a similar part sectional view of an intermediate step in which the rivet is driven through the sealing means and the wall of the tubular element.

Fig. 3 is a similar part sectional view of the finished rivet joint.

Fig. 4 is a view, similar to Figs 1-3, illustrating how the tubular element is inserted in another tube.

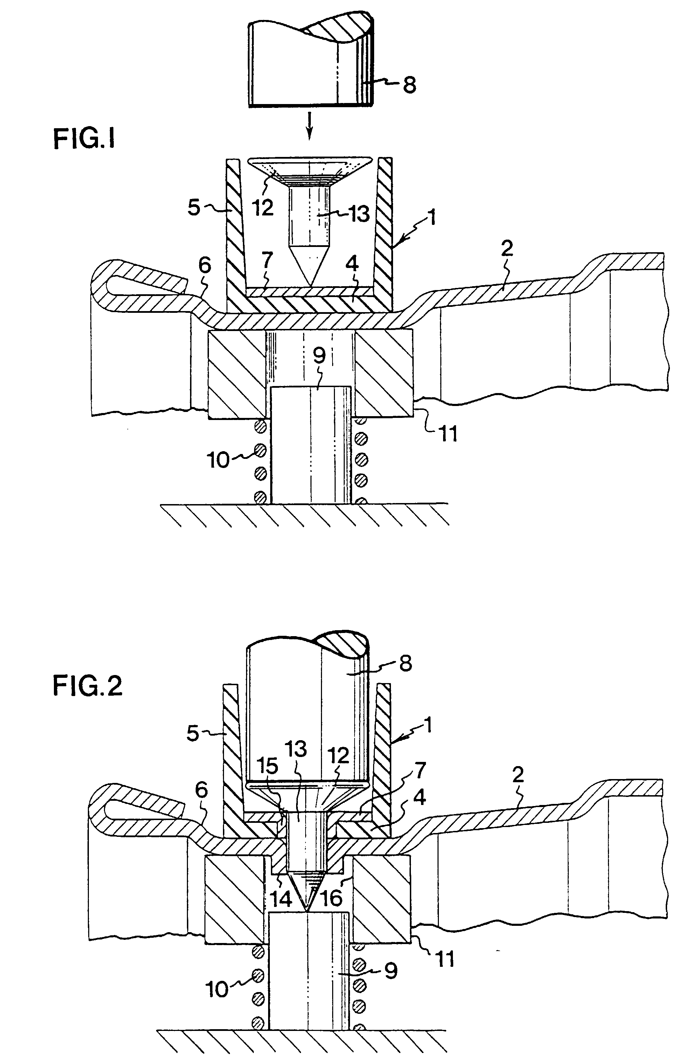

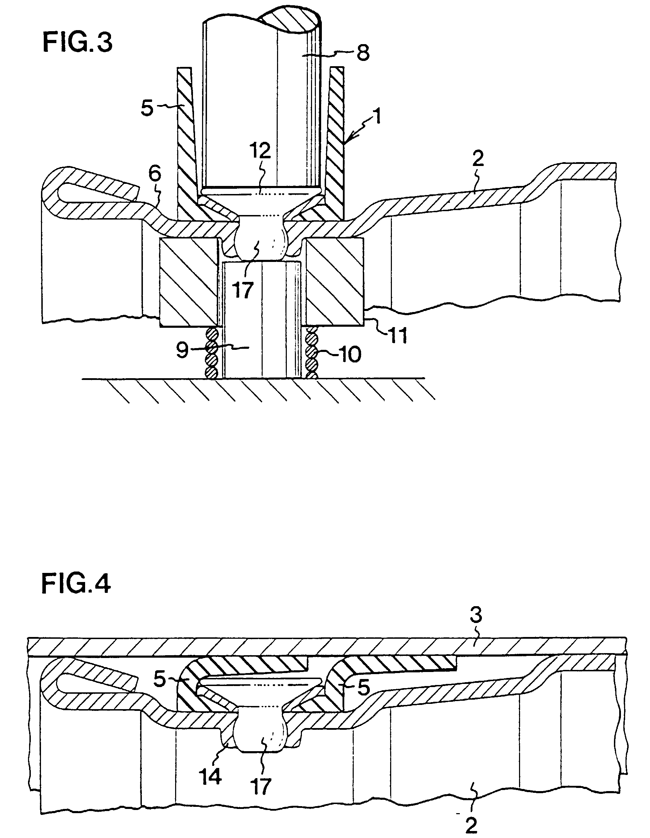

Figs 1-3 shows a device for carrying out the method of the invention, in which an external, elastic, circumferential joint-sealing means 1 is mounted on the outer side of a tubular element 2, which is part of e.g. a ventilation system. The tubular element 2 is intended in known manner to be partly inserted in another tube 3, especially a ventilation duct, as schematically shown in Fig. 4. In the illustrated embodiment, the sealing means 1 is a double-lip seal of U-shaped cross-section and of the type disclosed in the publication US-A-4,050,703 stated in the introduction to the specification and here included by reference.

The seal 1, preferably of rubber, thus has a web or base portion 4 to be applied against the outside of the tubular element 2, and two sealing lips 5 projecting from the base portion 4 and extending substantially radially outwards with respect to the tubular element 2. Preferably, the tubular element 2 has in known manner a circumferential channel 6 which has a smaller diameter than the rest of the tubular element 2 and in which the seal 1 is placed. The seal 1 is clamped by means of a clamping strap 7, as will be described in greater detail hereinafter. The device according to the invention comprises additional components which will be discussed further on, namely a stamp 8, schematically shown in Fig. 1, and abutment means cooperating with the stamp 8 and including a fixed column 9 and an annular holder or die 11 supported by a spring 10. The components 8-11 are used for driving a rivet having a head 12 and a shank 13 through the clamping strap 7, the base portion 4 and the wall of the tubular element 2.

The anchorage of the seal 1 according to the invention is accomplished in the following way. First, the elastic sealing ring 1 is forced on to the tubular element 2, whereupon the clamping strap 7 is applied and tightened around the base portion 4 so as to clamp the seal 1 against the tubular element 2. With the strap 7 thus tightened, the tubular element 2 is taken to a riveting station where the tubular element 2 is placed on the die 11 (see Fig. 1). The pointed rivet 12, 13 is positioned between the sealing lips 5 at the point where a rivet joint is desired, preferably in an overlapping portion of the strap 7 (for greater clarity, however, the Figures show only one strap layer). The rivet 12, 13, or the rivets as the case may be, is automatically fed to the riveting station by means of a special feed device (not shown). The reciprocating stamp 8 is thereafter caused, in a single operation, to drive the rivet shank 13 through the clamping strap 7, the base portion 4 of the seal 1 and the wall of the tubular element 2.

Fig. 2 shows the intermediate position in which the point of the rivet 12, 13 hits the free end of the column 9 after having pierced a hole through the strap 7, the base portion 4 and the tube wall. In this manner, the wall portion of the tubular element 2 immediately around the pierced hole is deformed as a collar 14 directed towards the interior of the tubular element 2 and surrounding the rivet shank 13. Similarly, the clamping strap 7 is deformed immediately around the pierced hole as a collar 15 directed towards the outer side of the tubular element 2 and in this position also surrounding the rivet shank 13. Fig. 2 also clearly shows how the column 9 defines together with the interior of the die 11 a space 16 in which the rivet shank 13 is deformed or upset during the continued stroke of the stamp 8 (see Fig. 3).

During the final part of the stroke of the stamp 8, the rivet shank 13 is deformed in a manner which clearly appears from a comparison of Figs 2 and 3, while the die 11 supporting the tubular element 2 is resiliently moved downwards against the action of the spring 10, preferably being a helical spring mounted around the column 9. In this final motion, when the stamp 8 strikes the piercing rivet 12, 13 on the column 9, the pointed rivet shank 13 is deformed or upset in a manner to form a bulge 17 within the space 16. The transverse dimensions of the bulge 17 exceed the transverse dimension of the hole pierced by the rivet shank 13 through the wall of the tubular element 2, while the rivet head 12 is retained on the outside of the tubular element 2. This results in a highly reliable joint preventing the rivet 12, 13 and thus the seal 1 from being pulled off the tubular element 2. In this manner, the seal 1 is anchored in a highly reliable fashion.

During the upsetting, the rivet shank 13 is forcefully urged against the boundary wall of the pierced hole. At the same time, the rivet head 12 is urged against and deforms the clamping strap 7 on the outside of the tubular element 2, while clamping the base portion 4 of the seal 1 therebetween. The inwardly directed collar 14 formed by the wall portion of the tubular element 2 immediately around the pierced hole forcefully engages the bulge 17 and contributes to strengthening the joint. Also, the collar 15 resulting from the deformed clamping strap 7 further contributes to a reliable anchorage of the seal 1.

After completed riveting, the rivet 12, 13 should have been struck as far into the channel 6 that the rivet head 12 does not constitute an obstacle to the outer tube 3 when being passed on to the inner tube 2, as shown in Fig. 4. This Figure also shows how the two sealing lips 5 are bent in known manner when the outer tube 3 is placed on the inner tube 2, with good fit between the two tubes 2, 3.

In the foregoing it has been described how the point and the shank of the rivet are deformed against abutment means including a fixed abutment column surrounded by a resiliently supported die. To bring about the upset or bulge of the rivet, the movable stamp strikes on the fixed column.

According to a modified embodiment of the invention (not shown), the die is replaced by an expandable holder which in a first step is expanded radially outwards against the inside of the tubular element. The clamping strap is thereafter applied and a rivet is positioned in front of the stamp which drives the rivet shank through the clamping strap, the seal web and the tube wall. The stamp is thereafter maintained in this position, that is against the rivet head, and a movable abutment means strikes the rivet point and deforms it so as to form a bulge as described above. According to this variant, the stamp thus forms the abutment for an impact coming from inside, in this case from the movable abutment means, preferably having a column corresponding to the column of the fixed abutment means described above. It should be pointed out that the upsetting of the rivet shank is performed also in this modified embodiment in a space defined by the column and a through hole in the expandable holder or die.

The variant of the invention described above is especially well suited for use in riveting in automatic machines.

To conclude, it should be noted that the invention is by no means restricted to the measures and components described hereinbefore, but several modifications are conceivable within the scope of the inventive concept as recited in the appended claims. In particular, it should be mentioned that several rivet joints can be provided around the seal to further secure the anchorage thereof. Moreover, the seal itself may be of other designs, e.g. have an L-shaped cross-section, in which case one leg of the L forms the base portion while the other leg forms a radial sealing lip, as described in the publications US-A-3,955,834 and WO 90/14544 stated by way of introduction. It is of course also evident that the seal may have more than two lips, in which case clamping straps are suitably tightened around all the base portions between the lips for reliable anchorage of the seal.

To those skilled in the art it is also evident that some of the steps to be performed in the method according to the invention can be carried out in different order. For instance, it is conceivable to first place the tubular element on the die in the riveting station and then apply the seal and tighten the clamping strap in place.

## Claims

1. A method for making a tubular element (2) with external, elastic, circumferential joint-sealing means (1), the tubular element being intended to be inserted in another tube (3) with a seal therebetween, the tubular element (2) and the tube (3) being adapted for use in a ventilation duct system, said sealing means (1) having in cross-section at least one base portion (4) to be applied to the outer side of the tubular element (2), and at least one sealing lip (5) projecting from said base portion and extending substantially radially outwards with respect to the tubular element, the method comprising the steps of placing the sealing means (1) on the tubular element (2) with the base portion (4) applied thereto in a circumferential channel (6) formed in the tubular element (2) and having a smaller diameter than the rest of the tubular element; applying a clamping strap (7) on said base portion (4) in said channel (6); tightening the clamping strap (7) in a manner to clamp the base portion (4) against the tubular element; and anchoring the clamping strap (7) in the tightened position so as to secure the sealing means (1) around the tubular element (2); **characterised** by the further steps of anchoring the clamping strap (7) and thus the sealing means (1) with the aid of at least one rivet having a head (12) and a pointed, piercing shank (13) which is driven through the clamping strap (7), preferably in an overlapping portion thereof, through said base portion (4) and through the wall of the tubular element (2); and deforming or upsetting the rivet shank (13) by abutment means (9) such that the deformed rivet shank (13) on the inside of the tubular element (2) forms a bulge (17) whose transverse dimensions exceed the transverse dimension of the hole pierced through the wall of the tubular element (2) by the rivet shank (13), while maintaining the rivet head (12) on the outside of the tubular element (2), whereby the rivet (12, 13) and thus the sealing means (1) are prevented from being pulled off the tubular element,
wherein the wall portion of the tubular element (2) immediately around the pierced hole is deformed as a collar (14) which is directed towards the interior of the tubular element and which is forcefully urged against and engages around said bulge (17), and
wherein the clamping strap (7) immediately around the pierced hole is deformed as a collar (15) which is directed towards the outer side of the tubular element (2) and which is forcefully pressed against the rivet head (12) and partly against the rivet shaft (13), and which is also pressed against said base portion (4) immediately around the pierced hole.

2. A method as claimed in claim 1, wherein the rivet shank (13) by the upsetting is forcefully urged against the boundary wall of the pierced hole, and the rivet head (12) is pressed against and deforms the clamping strap (7) on the outside of the tubular element (2), while clamping the base portion (4) of the sealing means (1) therebetween.

3. A device for making a tubular element (2) with external, elastic, circumferential joint-sealing means (1), the tubular element being insertable in another tube (3) with a seal therebetween, the tubular element (2) and the tube (3) being adapted for use in a ventilation duct system, said sealing element (1) having in cross-section at least one base portion (4) which can be applied against the outer side of the tubular element (2) in a circumferential channel (6) formed in the tubular element (2) and having a smaller diameter than the rest of the tubular element, and at least one sealing lip (5) projecting from the base portion (4) and extending substantially radially outwards with respect to the tubular element (2), the device comprising a clamping strap (7) to be applied on and tightened around the base portion (4) for clamping it against the tubular element (2) in said channel (6), and means for anchoring the clamping strap (7) in the tightened position to safely secure the sealing element (1) around the tubular element (2), **characterised** in that said anchoring means comprises reciprocating stamping means (8) for producing impacts on a rivet having a head (12) and a pointed, piercing shank (13), to drive the rivet shank (13) through the clamping strap (7), preferably in an overlapping portion thereof, through said base portion (4) and through the wall of the tubular element (2), and abutment means against which the rivet shank (13) is to be deformed or upset to form a bulge (17) on the inside of the tubular element (2); the abutment means comprising a column (9) on the free end of which the rivet shank (13) strikes, and a holder or die (11) with a hole for the column (9), the inner side of the tubular element (2) engaging the outer side of the die (11) during said riveting and upsetting operation; and the die (11) and the column (9) together defining a space (16), in which said deformation or upsetting of the rivet shank (13) takes place with said bulge (17) forcefully pressed against the boundary wall of the pierced hole,
wherein the wall portion of the tubular element (2) immediately around the pierced hole is deformed as a collar (14) which is directed towards the interior of the tubular element and which is forcefully urged against and engages around said bulge (17), and
wherein the clamping strap (7) immediately around the pierced hole is deformed as a collar (15) which is directed towards the outer side of the tubular element (2) and which is forcefully pressed against the rivet head (12) and partly against the rivet shaft (13), and which is also pressed against said base portion (4) immediately around the pierced hole.

## Patentansprüche

1. Verfahren zum Herstellen eines röhrenförmigen Elementes (2) mit einer äußeren, elastischen Umfangsverbindungs-Dichtungseinrichtung (1), wobei das röhrenförmige Element in eine andere Röhre (3) mit einer Dichtung dazwischen eingeführt werden soll, das röhrenförmige Element (2) und die Röhre (3) in einem Belüftungsleitungssystem eingesetzt werden, die Dichtungseinrichtung (1) im Querschnitt wenigstens einen unteren Abschnitt (4) hat, der an der Außenseite des röhrenförmigen Elementes (2) angebracht wird, sowie wenigstens eine Dichtungslippe (5), die von dem unteren Abschnitt vorsteht und sich in bezug auf das röhrenförmige Element im wesentlichen radial nach außen erstreckt, wobei das Verfahren die Schritte des Positionierens der Dichtungseinrichtung (1) auf dem röhrenförmigen Element (2), bei dem der untere Abschnitt (4) in einer Umfangsrinne (6), die in dem röhrenförmigen Element (2) ausgebildet ist und einen geringeren Durchmesser als der Rest des röhrenförmigen Elementes hat, daran angebracht wird; des Anbringens einer Klemmschelle (7) an dem unteren Abschnitt (4) in der Rinne (6), des Spannens der Klemmschelle (7), so daß der untere Abschnitt (4) an dem röhrenförmigen Element festgeklemmt wird; sowie des Befestigens der Klemmschelle (7) in der gespannten Position umfaßt, um die Dichtungseinrichtung (1) um das röhrenförmige Element (2) herum zu befestigen;
**gekennzeichnet durch** die weiteren Schritte des Befestigens der Klemmschelle (7) und damit der Dichtungseinrichtung (1) mit Hilfe wenigstens eines Niets mit einem Kopf (12) und einem spitzen, durchdringenden Schaft (13), der durch die Klemmschelle (7), vorzugsweise in einem überlappenden Abschnitt derselben, durch den unteren Abschnitt (4) und durch die Wand des röhrenförmigen Elementes (2) hindurchgetrieben wird; sowie des Verformens bzw. Stauchens des Nietschafts (13) durch eine Anschlageinrichtung (9), so daß der verformte Nietschaft (13) an der Innenseite des röhrenförmigen Elementes (2) eine Beule (17) bildet, deren Querabmessungen über der Querabmessung des von dem Nietschaft (13) durch die Wand des röhrenförmigen Elementes (2) gestoßenen Lochs liegen, wobei der Nietkopf (12) an der Außenseite des röhrenförmigen Elementes (2) verbleibt, so daß der Niet (12,13) und damit die Dichtungseinrichtung (1) nicht aus dem röhrenförmigen Element gezogen werden können, wobei der Wandabschnitt des röhrenförmigen Elementes (2) unmittelbar um das durchstoßene Loch herum als ein Bund (14) verformt wird, der auf das Innere des röhrenförmigen Elementes zu gerichtet ist und fest an die Beule (17) gedrückt wird und um sie herum anliegt, und
wobei die Klemmschelle (7) unmittelbar um das durchstoßene Loch herum als ein Bund (15) verformt wird, der auf die Außenseite des röhrenförmigen Elementes (2) gerichtet ist und fest an den Nietkopf (12) und teilweise an den Nietschaft (13) gepreßt wird und ebenfalls an den unteren Abschnitt (4) unmittelbar um das durchstoßene Loch herum gepreßt wird.

2. Verfahren nach Anspruch 1, wobei der Nietschaft (13) durch das Stauchen fest an die Grenzwand des durchstoßenen Lochs gedrückt wird, und der Nietkopf (12) an die Klemmschelle (7) an der Außenseite des röhrenförmigen Elementes (2) gepreßt wird und sie verformt, wobei der untere Abschnitt (4) der Dichtungseinrichtung (1) dazwischen eingeklemmt wird.

3. Vorrichtung zum Herstellen eines röhrenförmigen Elementes (2) mit einer äußeren, elastischen Umfangsverbindungs-Dichtungseinrichtung (1), wobei das röhrenförmige Element in eine andere Röhre (13) mit einer Dichtung dazwischen eingeführt werden kann, das röhrenförmige Element (2) und die Röhre (3) in einem Belüftungsleitungssystem eingesetzt werden, das Dichtungselement (1) im Querschnitt wenigstens einen unteren Abschnitt (4) hat, der an der Außenseite des röhrenförmigen Elementes (2) in einer Umfangsrinne (1), die in dem röhrenförmigen Element (2) ausgebildet ist und einen geringeren Durchmesser als der Rest des röhrenförmigen Elementes hat, angebracht werden kann, sowie wenigstens eine Dichtungslippe (5), die von dem unteren Abschnitt (4) vorsteht und sich in bezug auf das röhrenförmige Element (2) im wesentlichen radial nach außen erstreckt, wobei die Vorrichtung eine Klemmschelle (7) umfaßt, die um den unteren Abschnitt (4) herum angebracht und gespannt wird, um ihn an dem röhrenförmigen Element (2) in der Rinne (6) festzuklemmen, sowie eine Einrichtung zum Befestigen der Klemmschelle (7) in der gespannten Position, um das Dichtungselement (1) sicher um das röhrenförmige Element (2) herum zu befestigen, **dadurch gekennzeichnet,** daß die Befestigungseinrichtung eine Hub-Stempeleinrichtung (8) umfaßt, die Schläge auf einen Niet mit einem Kopf (12) und einem spitzen, durchdringenden Schaft (13) ausführt, um den Nietschaft (13) durch die Klemmschelle (7), vorzugsweise in einem überlappenden Abschnitt desselben, durch den unteren Abschnitt (4) und durch die Wand des röhrenförmigen Elementes (2) hindurchzutreiben, sowie eine Anschlageinrichtung, an der der Nietschaft (13) verformt bzw. gestaucht wird, um eine Beule (17) an der Innenseite des röhrenförmigen Elementes (2) herzustellen; wobei die Anschlageinrichtung eine Säule (9), auf deren freies Ende der Nietschaft (13) aufschlägt, sowie eine Aufnahme bzw. Form (11) mit einem Loch für die Säule (9) umfaßt, wobei die Innenseite des röhrenförmigen Elementes (2) beim Niet- und Stauchvorgang mit der Außenseite der Form (11) in Eingriff kommt; und die Form (11) sowie die Säule (9) zusammen einen Raum (16) bilden, in dem das Verformen bzw. Stauchen des Nietschafts (13) stattfindet, wobei die Beule (17) fest an die Grenzwand des durchstoßenen Lochs gepreßt wird, wobei der Wandabschnitt des röhrenförmigen Elementes (2) unmittelbar um das durchstoßene Loch herum als ein Bund (14) verformt wird, der auf das Innere des röhrenförmigen Elementes zu gerichtet wird und fest an die Beule (17) gedrückt wird und um sie herum anliegt, und
wobei die Klemmschelle (7) unmittelbar um das durchstoßene Loch herum als ein Bund (15) verformt wird, der auf die Außenseite des röhrenförmigen Elementes (2) gerichtet ist und fest an den Nietkopf (12) und teilweise an den Nietschaft (13) gepreßt wird und ebenfalls an den unteren Abschnitt (4) unmittelbar um das durchstoßene Loch herum gepreßt wird.

## Revendications

1. Procédé de fabrication d'un élément tubulaire (2) ayant un moyen d'étanchéité par joint extérieur élastique et circonférenciel (1), l'élément tubulaire étant destiné à être introduit dans un autre tube (3) avec un joint d'étanchéité entre eux, l'élément tubulaire (2) et le tube (3) étant adaptés pour être utilisés dans un système de conduit de ventilation, ledit moyen d'étanchéité (1) présentant en section transversale au moins une partie de base (4) devant être appliquée sur l'extérieur de l'élément tubulaire (2), et au moins une lèvre d'étanchéité (5) en saillie à partir de ladite partie de base s'étendant sensiblement radialement vers l'extérieur par rapport à l'élément tubulaire, le procédé comprenant les étapes de mise en place du moyen d'étanchéité (1) sur l'élément tubulaire (2), la partie de base (4) étant appliquée dans une rainure circonférencielle (6) formée dans l'élément tubulaire (2), et ayant un diamètre inférieur à celui du reste de l'élément tubulaire; d'application d'une sangle de serrage (7) sur ladite partie de base (4) qui se trouve dans ladite rainure (6); de blocage de la sangle de serrage (7) de manière à serrer la partie de base (4) contre l'élément tubulaire; et d'ancrage de la sangle de serrage dans la position serrée de manière à immobiliser le moyen d'étanchéité (1) autour de l'élément tubulaire (2); caractérisé par les étapes supplémentaires d'ancrage de la sangle de serrage (7) et ainsi du moyen d'étanchéité (1) à l'aide d'au moins un rivet comportant une tête (12) et un corps de perçage pointu (13), lequel est poussé à travers la sangle de serrage (7) , de préférence dans une partie de recouvrement de celle-ci à travers ladite partie de base (4) et à travers la paroi de l'élément tubulaire (2); et de déformation ou d'écrasement du corps de rivet (13) grâce à un moyen de butée (9), de telle façon que le corps de rivet déformé (13) qui se trouve à l'intérieur de l'élément tubulaire (2) forme un renflement (17) dont les dimensions transversales sont supérieures à la dimension transversale du trou percé par le corps de rivet (13) à travers la paroi de l'élément tubulaire (2), tout en maintenant la tête de rivet (12) à l'extérieur de l'élément tubulaire (2), grâce à quoi le rivet (12,13) et ainsi le moyen d'étanchéité (1) sont empêchés d'être retirés de l'élément tubulaire , dans lequel la partie paroi de l'élément tubulaire (2) qui se trouve immédiatement autour du trou percé est déformée pour devenir un collier (14) qui est orienté vers intérieur de l'élément tubulaire et qui est poussé fortement contre ledit renflement (17) et est en prise avec celui-ci et
dans lequel la sangle de serrage (7) qui se trouve immédiatement autour du trou percé est déformée pour devenir un collier (15) qui est orienté vers l'extérieur de l'élément tubulaire (2) et qui est poussé fortement contre la tête de rivet (12) et en partie contre le corps de rivet (13), et qui est également poussé contre ladite partie de base (4) qui se trouve immédiatement autour du trou percé.

2. Procédé selon la revendication 1, dans lequel le corps de rivet (13) est poussé fortement contre la paroi périphérique du trou percé grâce à l'écrasement, et dans lequel la tête de rivet (12) est poussée contre la sangle de serrage (7) qui se trouve sur l'extérieur de l'élément tubulaire (2) et la déforme, tout en serrant entre eux la partie de base (4) du moyen d'étanchéité (1).

3. Dispositif pour fabriquer un élément tubulaire (2) ayant un moyen d'étanchéité par joint extérieur élastique et circonférenciel (1), l'élément tubulaire pouvant être introduit dans un autre tube (3) avec un joint d'étanchéité entre eux, l'élément tubulaire (2) et le tube (3) étant adaptés pour être utilisés dans un système de conduit de ventilation, ledit élément d'étanchéité (1) présentant en section transversale au moins une partie de base (4), laquelle peut être appliquée contre l'extérieur de l'élément tubulaire (12) dans une rainure circonférencielle (6) formée dans l'élément tubulaire (2) et ayant un diamètre inférieur à celui du reste de l'élément tubulaire, et au moins une lèvre d'étanchéité (5) en saillie depuis la partie de base (4) et s'étendant sensiblement radialement vers l'extérieur par rapport à l'élément tubulaire (2), le dispositif comprenant une sangle de serrage (7) devant être appliquée sur la partie de base (4) et bloquée autour de celle-ci pour la serrer entre l'élément tubulaire (2) dans ladite rainure (6), et un moyen pour ancrer la sangle de serrage (7) en position bloquée pour immobiliser de manière sûre l'élément d'étanchéité (1) autour de l'élément tubulaire (2), caractérisé en ce que ledit moyen d'ancrage comprend un moyen de poinçonnage alternatif (8) pour produire des impacts sur un rivet comportant une tête (12) et un corps de perçage pointu (13), pour pousser le corps de rivet (13) à travers la sangle de serrage (7), de préférence dans une partie de recouvrement de celle-ci, à travers ladite partie de base (4) et à travers la paroi de l'élément tubulaire (2) et un moyen de butée contre lequel le corps de rivet (13) va être déformé ou écrasé pour former un renflement (17) à l'intérieur de l'élément tubulaire (2), le moyen de butée comprenant une colonne (9) sur l'extrémité libre de laquelle vient frapper le corps de rivet (13), et un support ou une matrice (11), ayant un trou destiné à la colonne (9), le côté intérieur de l'élément tubulaire (2) étant en prise avec l'extérieur de la matrice (11) durant ladite opération de rivetage et d'écrasement; la matrice (11) ainsi que la colonne (9) définissant ensemble un évidement (16), dans lequel se produit la déformation ou l'écrasement du corps de rivet (13), ledit renflement (17) étant poussé fortement contre la paroi périphérique du trou percé,
dans lequel la partie paroi de l'élément tubulaire (2) qui se trouve immédiatement autour du trou percé est déformée pour devenir un collier (14) qui est orienté vers l'intérieur de l'élément tubulaire et qui est poussé fortement contre ledit renflement (17) et qui l'entoure, et
dans lequel la sangle de serrage (7) qui se trouve immédiatement autour du trou percé est déformée pour devenir un collier (15) qui est orienté vers l'extérieur de l'élément tubulaire (2) et qui est poussé fortement contre la tête de rivet (12) et en partie contre le corps de rivet (13) et qui est également poussée contre ladite partie de base (4) qui se trouve immédiatement autour du trou percé.
